(19) Europäisches Patentamt
European Patent Office
Office européen des brevets

(11) **EP 2 420 856 B1**

(12) **EUROPÄISCHE PATENTSCHRIFT**

(45) Veröffentlichungstag und Bekanntmachung des Hinweises auf die Patenterteilung:
**03.08.2016 Patentblatt 2016/31**

(51) Int Cl.:
**G01S 5/02** *(2006.01)*    **G01S 13/86** *(2006.01)*

(21) Anmeldenummer: **11006479.7**

(22) Anmeldetag: **06.08.2011**

(54) **Vorrichtung und Verfahren zur dreidimensionalen Positionierung**

Device and method of three-dimensional positioning

Dispositif et procédé de positionnement tridimensionnel

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.08.2010 DE 102010034792**

(43) Veröffentlichungstag der Anmeldung:
**22.02.2012 Patentblatt 2012/08**

(73) Patentinhaber: **Airbus DS GmbH**
**82024 Taufkirchen (DE)**

(72) Erfinder: **Schlötzer, Susanne**
**95512 Neudrossenfeld (DE)**

(74) Vertreter: **Frenkel, Matthias Alexander**
**Wuesthoff & Wuesthoff**
**Patentanwälte PartG mbB**
**Schweigerstrasse 2**
**81541 München (DE)**

(56) Entgegenhaltungen:
**US-A1- 2009 140 887**

**Beschreibung**

Die Erfindung betrifft eine Vorrichtung und ein Verfahren zur dreidimensionalen Positionierung gemäß Anspruch 1 bzw. 9.

Eine dreidimensionale Positionierung mit hohen Genauigkeits-, Verfügbarkeits-, Kontinuitäts- und Integritätsanforderungen ist beispielsweise bei der Landung von Helikoptern von Bedeutung. Hierbei können vor allem bei schlechter oder gar keiner Sichtverbindung zum Landeplatz Probleme auftreten. Zur dreidimensionalen Positionierung während eines Landeanflugs sind verschiedene Technologien bekannt, die im Folgenden mit ihren Nachteilen kurz erläutert werden.

Bekannt ist beispielsweise die Integration von GPS (Global Positioning System) und einem INS (Inertial-Navigationssystem). Damit können jedoch nicht die Genauigkeitsanforderungen an eine dreidimensionale Positionslösung erzielt werden, die z.B. bei einer autonomen Landung erforderlich sind. Zudem sind differentielle Korrekturdaten nur eingeschränkt verfügbar. Weiterhin ist diese Lösung störanfällig gegenüber Jammern.

Weiterhin bekannt ist das sogenannte Precision Approach Radar, das jedoch hohe Betriebskosten verursacht. Außerdem ist das Nutzersegment nicht völlig autonom hinsichtlich der Positionsbestimmung und Integritätsüberwachung, da die Überwachung im Bodensegment statt im Nutzersegment erfolgt. Schließlich ist ein teures Bodensegment mit großen mechanischen Abmessungen und hoher Leistungsaufnahme erforderlich.

Eine weiter bekannte Technologie ist ein lokales zweidimensionales Radarpositionierungssystem, das jedoch auf eine zweidimensionale Positionierung beschränkt ist und in der Regel eine geringere Verfügbarkeit und Kontinuität als bei einem Sensordatenfusionsansatz mit GNSS (Global Navigation Satellite System) und IMU (Inertial Measurement Unit) aufweist. Aufgrund der Systembeschränkung auf eine zweidimensionale Positionierung kommt es nicht als Landehilfe in Frage, sondern ist lediglich für Taxiing geeignet.

Schließlich ist ein Integrity Beacon Landing System bekannt, das allerdings leicht durch Jammer gestört werden kann, da es ausschließlich im GNSS-Frequenzband arbeitet. Eine hohe Positionsgenauigkeit kann nur durch Anwendung von Trägerphasenalgorithmen erzielt werden, was sich negativ auf die Verfügbarkeit auswirkt und die Entwicklung von Integritätskonzepten erschwert. Zudem verursacht diese Technologie höhere Kosten für das Bodensegment aufgrund der Integrity Beacons.

Es wird ferner wird auf folgende Veröffentlichungen verwiesen, die sich mit Positionierungslösungen befassen:

- Thibaut G.: "Cost Benefit Analysis on Precision Approach and Landing Systems (PALS) - Final Report", NIAG SG-99 Abschlussbericht, Vol. 2, Dokument AC/224(ACG5)D(2007)0002, Juni 2007;

- Cohen C.E., Pervan B.S., Cobb H.S., Lawrence D.G. Powell J.D., Parkinson B.W.: "Precision Landing of Aircraft Using Integrity Beacons", in Global Positioning System: Theory and Applications Volume II, Vol. 164, American Institute of Aeronautics and Astronautics, Washington, DC, 1996;

- Greenspan R.L.: "GPS and Inertial Integration", in Global Positioning System: Theory and Applications Volume II, Vol. 164, American Institute of Aeronautics and Astronautics, Washington, DC, 1996; und

- "SYMEO Local Positioning Radar System LPR-B 1 D", Produktdokumentation, Symeo GmbH, 2009

Die US 2009/140887 A1 beschreibt ein System zur Positionsbestimmung mittels GPS, das mit einer Korrektureinheit gekoppelt ist, die Positionskorrekturen für die aus GPS-Signalen abgeleiteten Positionsdaten ableitet oder empfängt. Die Positionskorrekturen können von Satelliten oder Bodenstationen empfangen werden. Weiterhin ist ein Inertialnavigationssystem vorgesehen, um die Lage des Systems zu ermitteln. Es kann auch ein Radar zur Entfernungsmessung zu am Straßenrand angebrachten Transpondern und zur Positionsbestimmung eines Fahrzeugs auf einer Straße vorgesehen sein. Die Positionsdaten, Positionskorrekturen, Radar- und Intertialnavigations-Daten werden von einem zentralen Prozessor verarbeitet.

Aufgabe der vorliegenden Erfindung ist es, eine verbesserte dreidimensionale Positionierung, die hohe Genauigkeits-, Verfügbarkeits-, Kontinuitäts- und Integritätsanforderungen an die Positionslösung vereinbar macht, zu ermöglichen.

Diese Aufgabe wird durch eine Vorrichtung zur dreidimensionalen Positionierung mit den Merkmalen von Anspruch 1 und durch ein Verfahren zur dreidimensionalen Positionierung mit den Merkmalen von Anspruch 9 gelöst. Weitere Ausgestaltungen der Erfindung sind Gegenstand der abhängigen Ansprüche.

Die Erfindung sieht eine Fusion von Sekundärradarmessungen, GNSS Messungen und IMU-Daten in einem Integrationsprozessor vor, der eine dreidimensionale Position anhand der fusionierten Messungen und Daten ermittelt. Der Integrationsprozessor kann zur Fusion eine Kopplung der Messungen und Daten mit einem nichtlinearen Filter durchführen. Nach der Erfindung kann die Berechnung einer dreidimensionalen Position nutzerseitig autonom auf dem Integrationsprozessor erfolgen. Das ermöglicht die Integritätsüberwachung der Positionslösung direkt am Nutzer, wo die Information eines Integritätsalarms am frühesten benötigt wird. Das für die Zwecke der Erfindung eingesetzte Sekundärradarsystem, das als im C-Band (IEEE) arbeitendes FMCW (Frequency Modulated Continuous Wave)-Radar ausgeführt sein kann, weist eine Basisstation, die auf der Nutzereinheit befestigt wird, und mehrere in einem lokal begrenzten Gebiet ausgebrachte Transponder(-Stationen) auf. Die Entfernungsmessungen zwischen der Basisstation und den Transpondern beruhen auf Laufzeitmessungen. Dabei sendet die Basisstation FMCW-Radarsignale aus, auf die sich die Transponder innerhalb einer festen Zeit synchronisieren. Nach erfolgreicher Synchronisation senden die Transponder ein FMCW Antwortsignal zurück. Um bei einer Kopplung der Messungen und Daten mit einem nichtlinearen Filter eine gute Beobachtbarkeit der Filterzustände sowie eine hohe

Verfügbarkeit und Integrität der dreidimensionalen Positionslösung zu erzielen, können zusätzlich GNSS-Rohmessungen und IMU-Daten in dem nichtlinearen Filter verarbeitet werden. Das Verfahren ist somit robust gegenüber Signalabschattungen und geometrische Beschränkungen des lokalen Sekundärradarsystems.

Eine Ausführungsform der Erfindung betrifft eine Vorrichtung zur dreidimensionalen Positionierung mit einer Sekundärradar-Basisstation, die zur Entfernungsmessung zu Transpondern vorgesehen ist und mindestens eine Radar-Antenne aufweist,

einem GNSS-Empfänger, der zur Messung von GNSS-Signalen vorgesehen ist und eine GNSS-Empfangsantenne aufweist,

einer Inertialmesseinheit, die dazu vorgesehen ist, die Lage der GNSS-Empfangsantenne sowie der mindestens einen Radar-Antenne in einem gemeinsamen Koordinatensystem in Bezug auf einen Referenzpunkt zu ermitteln, und

einem Integrationsprozessor, dem Pseudorangemessungen des GNSS-Empfängers, Radar-Entfernungsmessungen und von der Inertialmesseinheit gemessene Bewegungen der Vorrichtung um die Achsen des gemeinsamen Koordinatensystems zugeführt werden und der eine dreidimensionale Position eines gemeinsamen Bezugspunktes durch Fusion der zugeführten Messungen und Daten ermittelt, wobei eine Hebelarmkompensation unter Berücksichtigung der gemessenen Bewegungen durchgeführt wird.

Durch die Fusion von Messungen und Daten aus unterschiedlichen Quellen kann eine robuste und sehr zuverlässige Ermittlung einer dreidimensionalen Position des im Nutzersegment verankerten Bezugspunktes erzielt werden, was beispielsweise für einen sicheren Landeanflug eines Helikopters wichtig ist.

Die Sekundär-Basisstation kann ausgebildet sein, um im C-Band (IEEE) zu arbeiten und FMCW-Radarsignale zur Entfernungsmessung zu nutzen.

Bei der Vorrichtung kann ein inertiales Navigationssystem vorgesehen sein, das die Inertialmesseinheit aufweist, und der Integrationsprozessor kann ausgebildet sein, außerhalb eines Operationsgebiets des Sekundärradar-Systems eine dreidimensionale Position mit einer ersten gekoppelten Navigation auf Basis der Pseudorangemessungen des GNSS-Empfängers und von Inertialnavigationsmessungen des inertialen Navigationssystems durchzuführen, und innerhalb des Operationsgebiets der Sekundärradar-Basisstation eine dreidimensionale Position mit einer zweiten gekoppelten Navigation auf Basis der Radar-Entfernungsmessungen, der Pseudorangemessungen des GNSS-Empfängers und der Inertialnavigationsmessungen des inertialen Navigationssystems durchzuführen.

Hierdurch kann beispielsweise in einer Flugphase, in der die Sekundärradar-Basisstation zu weit von Transpondern des Bodensegments entfernt ist, eine dreidimensionale Positionsermittlung auf Basis eines GNSS und von Inertialnavigation erfolgen, während in einer Anflugphase in der Nähe der Transponder zusätzlich die Entfernungsmessungen zwischen der/den Radarantenne/n und den Transpondern für die dreidimensionale Positionierung herangezogen werden, die bedingt durch die geringeren Messvarianzen höher gewichtet werden als die Pseudorangemessungen des GNSS Empfängers. Hierdurch kann in verschiedenen Flugphasen eine optimale dreidimensionale Positionierung hinsichtlich verfügbarer Messungen und dazugehöriger Messvarianzen erreicht werden.

Für das vorliegende nichtlineare Filterproblem kann der Integrationsprozessor einen Sigma-Point Kalman Filter zum Verarbeiten der Pseudorangemessungen des GNSS-Empfängers, der IMU Daten und der Radar-Entfernungsmessungen aufweisen. Mit einem Sigma-Point Kalman Filter wird vermieden, dass Terme zweiter oder höherer Ordnung vollständig vernachlässigt werden, wie dies bei einer Linearisierung der Messgleichungen der Fall wäre. Die Berücksichtigung von Nichtlinearitäten ist insbesondere bei den Sekundärradarmessungen auf Grund der kleinen Distanzen zwischen dem Nutzersegment und den Transponder-Stationen relevant, da hier Terme zweiter Ordnung gegenüber dem Messrauschen nicht mehr ohne weiteres vernachlässigbar sind.

Der Sigma-Point Kalman Filter kann zum Ermitteln von INS Navigationslösungs-Korrekturdaten aus den Pseudorangemessungen des GNSS-Empfängers und den Radar-Entfernungsmessungen vorgesehen sein, und der Integrationsprozessor kann einen Strapdown-Algorithmus ausführen, der anhand der Korrekturdaten und der von der Inertialmesseinheit gemessenen Bewegungen der Vorrichtung um die Achsen des gemeinsamen Koordinatensystems die dreidimensionale Position ermittelt.

Der Sigma-Point Kalman Filter kann alternativ zum Ermitteln der dreidimensionalen Position anhand der Pseudorangemessungen des GNSS-Empfängers, der Radar-Entfernungsmessungen und einer INS-Navigationslösung ausgebildet sein und die ermittelte dreidimensionale Position kann zur Kalibration an ein inertiales Navigationssystem der Vorrichtung zurück gekoppelt werden.

Der Sigma-Point Kalman Filter sollte vor allem nicht von einer Linearisierung einer Schrägentfernung zwischen der mindestens einen Radar-Antenne und einem Transponder ausgehen, sondern kann auch nichtlineare Terme, insbesondere Terme zweiter Ordnung, berücksichtigen.

Insbesondere kann eine Schrägentfernung r unter Verwendung der folgenden nichtlinearen Funktion, die auch Terme zweiter Ordnung berücksichtigt, approximiert werden:

$$\tilde{r}\left(\underline{x}_{U,k}\right) = r\left(\underline{x}_{U,k}^{-}\right) + \left(\underline{x}_{U,k} - \underline{x}_{U,k}^{-}\right)^{T} \nabla r\left(\underline{x}_{U,k}^{-}\right) + \frac{1}{2}\left(\underline{x}_{U,k} - \underline{x}_{U,k}^{-}\right)^{T} \mathrm{H}\left(\underline{x}_{U,k}^{-}\right)\left(\underline{x}_{U,k} - \underline{x}_{U,k}^{-}\right).$$

mit $\underline{x}_{U,k}$ ist ein dreidimensionaler Positionsvektor zum Zeitpunkt *k* zwischen einem Transponder *TP* und der Vorrichtung $U$, $\underline{x}_{U,k}^{-}$ ist ein aktueller Näherungspunkt, $\nabla r\left(\underline{x}_{U,k}^{-}\right)$ ist der Vektor der partiellen Ableitung von r im Punkt $\underline{x}_{U,k}^{-}$ und $\mathrm{H}\left(\underline{x}_{U,k}^{-}\right)$ ist die Matrix der zweiten partiellen Ableitung von *r* im Punkt $\underline{x}_{U,k}^{-}$.

Zur Lösung des nichtlinearen Filterproblems kann der nichtlineare Filter ein nichtlineares Optimierungsverfahren einsetzen, insbesondere kann ein Sigma-Point Kalman Filter oder ein Filter 2. Ordnung für die Optimierung verwendet werden.

Weiterhin kann der nichtlineare Filter ein Zustandsmodell implementieren, das abhängig von der Applikation der Vorrichtung lineare oder nichtlineare Zustandsgleichungen aufweist.

Eine weitere Ausführungsform der Erfindung betrifft die Verwendung einer Vorrichtung zur dreidimensionalen Positionierung nach der vorhergehenden Erfindung an Bord einer Flugvorrichtung zur Anflugnavigation auf einen Landeplatz, in dessen Randbereichen mehrere Sekundärradar -Transponder für die Sekundärradar-Basisstation der Vorrichtung angeordnet sind.

Schließlich betrifft eine weitere Ausführungsform der Erfindung ein Verfahren zur dreidimensionalen Positionierung, mit den folgenden Schritten:

Empfangen von Radar-Entfernungsmessungen einer Sekundärradar-Basisstation, die zur Entfernungsmessung zu Transpondern vorgesehen ist und mindestens eine Radar-Antenne aufweist,

Empfangen von Pseudorangemessungen eines GNSS-Empfängers, der zur Messung von GNSS-Signalen vorgesehen ist und eine GNSS-Empfangsantenne aufweist,

Empfangen von Bewegungsmessungen einer Inertialmesseinheit, die dazu vorgesehen ist, die Lage der GNSS-Empfangsantenne sowie der mindestens einen Radar-Antenne in einem gemeinsamen Koordinatensystem in Bezug auf einen Referenzpunkt zu ermitteln, und

Ermitteln einer dreidimensionalen Position eines gemeinsamen Bezugspunktes durch Fusionieren der Pseudorangemessungen des GNSS-Empfängers, der Radar-Entfernungsmessungen und der Daten der Inertialmesseinheit unter Berücksichtigung einer Hebelarmkompensation zwischen dem Bezugspunkt, der GNSS-Empfangsantenne, der mindestens einen Radar-Antenne und der Inertialmesseinheit. Die Hebelarmkompensation bewirkt, dass sich anschließend alle Messungen auf denselben Bezugspunkt beziehen. Die Hebelarmkompensation ist erforderlich, da die GNSS-Empfangsantenne, die Radar-Antenne(n) und die Inertialmesseinheit im Normalfall räumlich separiert sind.

Das Verfahren kann beispielsweise in einem On-Board-Rechner einer Flugvorrichtung, beispielsweise eines Flugzeugs oder Helikopters, implementiert werden, in der bereits ein GNSS Empfänger und eine GNSS-Empfangsantenne sowie eine Inertialmesseinheit und ggf. ein Sekundärrdarsystem vorhanden sind. Damit lässt sich ein bestehendes Flug-Navigationssystem aufrüsten und verbessern, indem auch beim Landeanflug eine präzise und zuverlässige dreidimensionale Positionierung ermöglicht wird. Das Verfahren kann als Software implementiert sein, die in den On-Board-Rechner eingespielt werden kann.

Das Verfahren kann ferner durch die folgenden Schritte gekennzeichnet sein:

Nichtlineares Filtern zum Ermitteln von INS Navigationslösungs-Korrekturdaten aus den empfangenen Pseudorangemessungen und den empfangenen Radar-Entfernungsmessungen und

Ausführen eines Strapdown-Algorithmus zum Ermitteln der dreidimensionalen Position anhand der Korrekturdaten und der empfangenen Bewegungsmessungen, oder

Nichtlineares Filtern zum Ermitteln der dreidimensionalen Position anhand der empfangenen Pseudorangemessungen, der empfangenen Radar-Entfernungsmessungen und der INS Navigationslösung.

Das nichtlineare Filtern kann das Approximieren einer Schrägentfernung zwischen der mindestens einen Radar-Antenne und einem Transponder durch eine nichtlineare Funktion, insbesondere als Spezialfall eine quadratische Funktion, aufweisen, insbesondere als Spezialfall das Approximieren einer Schrägentfernung $r$ unter Verwendung der folgenden nichtlinearen Funktion:

$$\tilde{r}\left(\underline{x}_{U,k}\right) = r\left(\underline{x}_{U,k}^{-}\right) + \left(\underline{x}_{U,k} - \underline{x}_{U,k}^{-}\right)^{T} \nabla r\left(\underline{x}_{U,k}^{-}\right) + \frac{1}{2}\left(\underline{x}_{U,k} - \underline{x}_{U,k}^{-}\right)^{T} \mathrm{H}\left(\underline{x}_{U,k}^{-}\right)\left(\underline{x}_{U,k} - \underline{x}_{U,k}^{-}\right).$$

mit $\underline{x}_{U,k}$ ist ein dreidimensionaler Positionsvektor zum Zeitpunkt $k$ zwischen einem Transponder $TP$ und der Vorrichtung $U$, $\underline{x}_{U,k}^{-}$ ist ein aktueller Näherungspunkt, $\nabla r\left(\underline{x}_{U,k}^{-}\right)$ ist der Vektor der partiellen Ableitung von $r$ im Punkt $\underline{x}_{U,k}^{-}$ und $\mathrm{H}\left(\underline{x}_{U,k}^{-}\right)$ ist die Matrix der zweiten partiellen Ableitung von $r$ im Punkt $\underline{x}_{U,k}^{-}$.

Das nichtlineare Filtern kann zur Lösung des nichtlinearen Filterproblems ein nichtlineares Optimierungsverfahren einsetzen, insbesondere ein Sigma-Point Kalman Filter oder ein Filter 2. Ordnung für die Optimierung verwenden.

Die vorliegende Erfindung betrifft gemäß einer weiteren Ausführungsform ein Computer-Programm zur Durchführung eines Verfahrens gemäß einer Ausführungsform der vorliegenden Erfindung und ein Computer-Programm-Produkt beinhaltend einen maschinenlesbaren Programmträger, auf dem das Computer-Programm in der Form von elektronisch und/oder optischen lesbaren Steuersignalen gespeichert sein kann.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in

Fig. 1 ein Ausführungsbeispiel der Systemarchitektur einer Vorrichtung zur dreidimensionalen Positionierung gemäß der Erfindung;

Fig. 2 die Verfügbarkeit und Gewichtung der Sensordaten im Nutzersegment im Verlauf einer Anflugtrajektorie gemäß der Erfindung;

Fig. 3 einen gekoppelten Ansatz für Sekundärradar-, GNSS RX- und IMU-Sensordaten gemäß der Erfindung; und

Fig. 4 einen gekoppelten Ansatz für Sekundärradar- und GNSS RX-Sensordaten, integriert mit einer INS-Navigationslösung, gemäß der Erfindung.

In der folgenden Beschreibung können gleiche, funktional gleiche und funktional zusammenhängende Elemente mit den gleichen Bezugszeichen versehen sein. Absolute Werte sind im Folgenden nur beispielhaft angegeben und sind nicht als die Erfindung einschränkend zu verstehen.

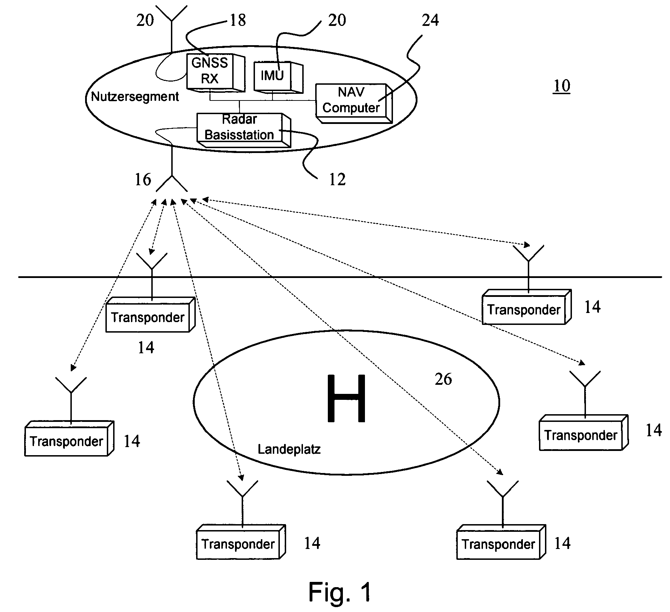

Im Folgenden wird die Systemarchitektur eines Sekundärradar-gestützten 3D-Positionierungssystems und eines gekoppelten nichtlinearen Filteransatzes anhand einer in Fig. 1 dargestellten Vorrichtung 10 für die genaue dreidimensionale Positionierung in einem räumlich begrenzten Gebiet gemäß der Erfindung beschrieben. Die Architektur weist ein Bodensegment mit einem Landeplatz für Helikopter und ein Nutzersegment auf, das sich in einem Helikopter befindet.

Systemarchitektur

Das Boden- und das Nutzersegment der Vorrichtung 10 für die genaue dreidimensionale Positionierung in einem räumlich begrenzten Gebiet weist die folgenden Elemente auf:

1) Bodensegment:

Eine variable Anzahl von Sekundärradar-Transpondern 14, deren Anordnung den lokalen Begebenheiten angepasst werden kann und deren Antennenausrichtung hinsichtlich der konkreten Anwendung optimiert werden kann. Die Transponder können beispielsweise an den Randbereichen einer Anflugzone, in Fig. 1 um den Helikopter-Landeplatz 26 herum angeordnet sein, um, so mittels Radar den Landeplatz insbesondere bei schlechten Sichtverhältnissen zu erkennen, beispielsweise bei Bodennebel.

2) Nutzersegment:

a. Eine Sekundärradar-Basisstation 12 mit mindestens einer Radar-Antenne 16, deren Platzierung je nach Anwendungsfall optimiert werden kann, um Abschattungen der Radarsignale und Mehrwegeeffekte zu vermeiden. Eine Erweiterung auf zwei oder mehr Radarantennen ist problemlos möglich. Obwohl auch mehrere Radarantennen am Nutzersegment verwendet werden können, gehen die nachfolgenden Beschreibungen zugunsten der Übersichtlichkeit von einer einzigen Radarantenne aus. Die von der Basisstation ausgesendeten Radarsignale (gestrichelte Linien in Fig. 1) werden von den Transpondern 14 des Bodensegments zurückgesendet.

b. Ein GNSS (Global Navigation Satellite System) Empfänger 18 mit GNSS Empfangsantenne 20. Der GNSS-Empfänger kann beispielsweise ein Empfänger für Signale von NAVSTAR-GPS, GLONASS oder dem zukünftigen europäischen GNSS GALILEO sein.

c. Eine IMU (Inertial Measurement Unit) 20, um die Lage der GNSS Empfangsantenne und der Radarantenne(n) auf ein gemeinsames im Nutzersegment verankertes Koordinatensystem beziehen zu können.

d. Ein (Navigations-)Computer 24, auf dem die Sensordatenfusion und die Berechnung der dreidimensionalen Positionslösung des Nutzers stattfinden. Der Computer 24 implementiert auch einen Integrationsprozessor für die Sensordaten mit dem oben erwähnten gekoppelten nichtlinearen Filteransatz, der später noch im Detail beschrieben wird.

Insofern das jeweilige Nutzersegment standardmäßig über weitere Sensoren (z.B. Altimeter) verfügt, können diese zusätzlichen Sensordaten auch zur Generierung der Positionslösung mit verwertet werden. Die in Fig. 1 gezeigte Sensoranordnung stellt den Mindestumfang der Vorrichtung dar, in der das Sekundärradar-System 12, 14 die Kernkomponente ist. Mit diesem Mindestsetup kann bereits eine ausreichend gute Performance erzielt werden. Eine Erweiterung um Temperatur-, Druck- und Feuchtigkeitssensoren ist möglich, um bessere Ergebnisse bei der Modellierung der Laufzeitverzögerungen durch die Troposphäre zu erzielen.

Die Koordinaten der Transponder-Antennen 14 in einem absoluten Koordinatensystem sind dem Nutzersegment bekannt, damit es die Radar-Entfernungsmessungen sinnvoll in dem nichtlinearen Filter mit einbeziehen kann. Die Information zu den Transponder-Koordinaten kann entweder statisch im Nutzersegment hinterlegt werden oder dynamisch über einen Datenlink zum Nutzersegment übertragen werden. Falls sich die Transponder 14 auf einer bewegten Plattform - z.B. einem Schiffsträger - befinden, sollten die Transponder-Absolutkoordinaten dynamisch angepasst werden.

Das Sekundärradar-System 12, 14 arbeitet im C-Band (IEEE) und nutzt FMCW-Radarsignale (FMCW: Frequency Modulated Continuous Wave) zur Entfernungsmessung. In einem Umfeld kurzer bis mittlerer Reichweite von den Transpondern 14 des Bodensegments stehen präzise Entfernungsmessungen an der Sekundärradar-Basisstation 12 des Nutzersegments zur Verfügung. Innerhalb dieses räumlich begrenzten Gebietes kann eine hochgenaue dreidimensionale Positionierung erfolgen. Die Positionslösung innerhalb des Operationsgebiets zeichnet sich durch eine hohe Verfügbarkeit und Kontinuität sowie durch ein sehr kleines Integritätsrisiko aus, unzulässig große Positionsfehler nicht zu erkennen.

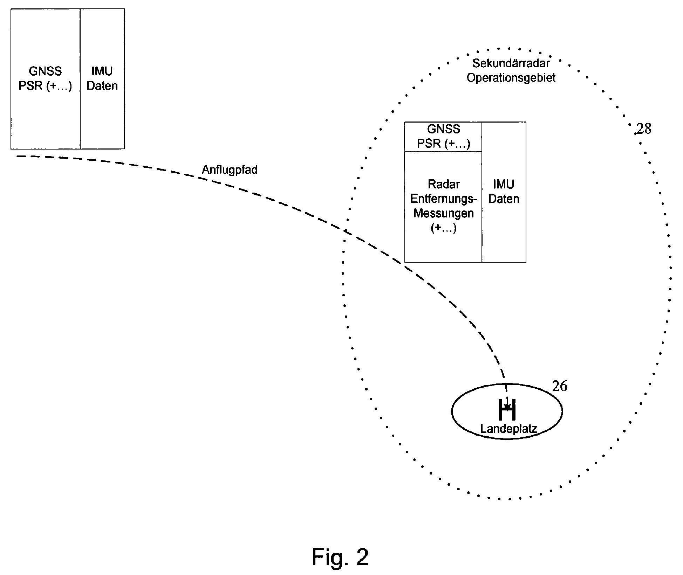

Aus den folgenden Gründen werden neben den rauscharmen Entfernungsmessungen des Sekundärradar-Systems 12, 14 auch stärker verrauschte GNSS Pseudorange-Messungen vom nichtlinearen Filter verarbeitet: Das Sekundärradar-System deckt ein begrenztes Operationsgebiet ab und wird in der Regel nur dort installiert, wo gleichzeitig hohe Positionierungsgenauigkeiten, Verfügbarkeiten und Kontinuität neben einem geringen Integritätsrisiko verlangt werden, in Fig. 1 am Landeplatz 26. Außerhalb dieses Gebiets sind die Anforderungen an die Positionslösung in der Regel geringer. Mit der erfindungsgemäßen Vorrichtung kann eine Verbesserung der dreidimensionalen Positionslösung mit Annäherung an das kritische Operationsgebiet, z.B. dem in Fig. 1 gezeigten Helikopter-Landeplatz 26, erzielt werden. Dieses Konzept ist in Fig. 2 am Beispiel eines Anflugpfads bzw. einer Anflugtrajektorie verdeutlicht: Außerhalb des Sekundärradar-Operationsgebiets 28 (gepunktete Linie in Fig. 2) stehen keine rauscharmen Radar-Entfernungsmessungen zur Verfügung, so dass die dreidimensionale Positionslösung ausschließlich auf einer gekoppelten (Differential)GNSS/INS (Inertial Navigation System) Navigationslösung beruht. Innerhalb des Operationsgebiets 28 wird eine gekoppelte Sekundärradar/(Differential)GNSS/INS Navigationslösung ermittelt. Im nichtlinearen Filter können hierbei die GNSS Pseudorange-Messungen aufgrund der höheren Messvarianzen wesentlich geringer gewichtet werden als die Radar-Entfernungsmessungen, die entscheidend geringere Messvarianzen aufweisen.

Im Operationsgebiet 28 des Sekundärradars, d.h. in der Nähe des Landeplatz 26 in Fig. 1, können die verrauschten Pseudorangemessungen nach wie vor im Filter mit einer geringen Gewichtung berücksichtigt werden, anstatt nur noch die rauscharmen Radar-Entfernungsmessungen zu verarbeiten. Somit kann die Anzahl der Transponder 14 im System gering gehalten werden und das Positionierungsverfahren ist weniger anfällig gegenüber dem Ausfall von Entfernungsmessungen zwischen der Sekundärradar-Basisstation 12 und einzelnen Transpondern 14 aufgrund von Abschattungen. Würden ausschließlich Radar-Entfernungsmessungen für die Positionierung herangezogen, könnten sich sehr große VDOPs (Vertical Dilution Of Precision) für den Fall ergeben, in dem sich die Transponder-Antennen 14 und die Radar-Antenne 16 des Nutzersegments annähernd in einer Ebene befinden. Bei einer Kombination von Satellitensignalmessungen und Radarsignalmessungen in einem gekoppelten Filteransatz ergeben sich innerhalb des Operationsgebiets durchwegs sehr gute HDOP (Horizontal Dilution Of Precision) und VDOP-Werte.

Das Nutzersegment verfügt im Raum über drei rotatorische Freiheitsgrade. Die Kenntnis der Lagewinkel des Nutzersegments ist für das dreidimensionale Positionierungskonzept erforderlich, da nutzerseitig zwei räumlich separierte Antennen (Radar-Antenne 16 und GNSS Empfangsantenne 20 in Fig. 1) für die GNSS-Signale und die Radarsignale verwendet werden. Die erforderliche Lageinformation wird durch Integration der IMU 20 gewonnen. Damit können die GNSS- und Radarmessungen auf einen gemeinsamen Referenz- bzw. Bezugspunkt bezogen werden, indem eine Hebelarmkompensation durchgeführt wird. Weitere positive Aspekte hinsichtlich der Verwendung der IMU 20 sind, dass das Inertialsystem eine hohe Verfügbarkeit aufweist, hohe Datenraten erzielt werden können und eine vollständige Navigationslösung für alle sechs Freiheitsgrade des Nutzersegments ermittelt werden kann.

Gekoppelter nichtlinearer Filteransatz

Die nachfolgend aufgelisteten Sensordaten werden nutzerseitig fusioniert, um eine hochgenaue 3D-Positionslösung zu erhalten. Aufgrund der gewählten Sensorkombination kann eine vollständige Navigationslösung bestimmt werden, die über eine reine 3D-Positionsangabe hinausgeht. Damit die Sensordatenfusion zu einer hochgenauen Positionslösung führt, werden die räumlichen Unterschiede zwischen GNSS-Antennenposition, Radar-Antennenposition(en) und ISA (Inertial Sensor Assembly) im Messmodell des Filters berücksichtigt. Die Unterschiede zwischen den Sensordaten-Bezugspunkten (GNSS-Antennenphasenzentrum, Radar-Antennenphasenzentrum, ISA) werden bei der Systeminstallation z.B. in North-East-Down (NED) Koordinaten bestimmt. Als gemeinsamer Bezugspunkt wird im Folgenden die ISA ausgewählt, so dass sich nach der Systeminstallation die beiden Verschiebungsvektoren $\delta_{Radar,NED}$ und $\delta_{GNSS,NED}$ angeben lassen. Durch Verwendung der IMU 22 im Nutzersegment werden die Winkel Roll, Pitch und Yaw des Nutzersegments beobachtbar. Mit Hilfe der kontinuierlich aktualisierten Lageinformation und der vorab bestimmten Verschiebungsvektoren $\delta_{radar,NED}$ und $\delta_{GNSS,NED}$ lässt sich die Angabe der GNSS- und Radar-Beobachtungsgleichungen auf ein gemeinsames (Referenz-)Koordinatensystem beziehen.

Im Folgenden werden die Sensorausgangsdaten einzeln aufgelistet. Die Verarbeitung einiger Daten ist optional, so dass zwischen einem höheren Rechenaufwand und einer Performancesteigerung durch Verwertung zusätzlicher unabhängiger Messungen im Filter abgewogen werden kann.

Das Sekundärradar-System 12 liefert auf der Nutzerseite die folgenden Messungen:

- Schrägentfernungen zu n Transpondern 14 des Bodensegments

- Optional: Entfernungsänderungsraten zu n Transpondern 14 des Bodensegments

- Zu den Messungen gehörende Qualitätsfaktoren und/oder Varianzen

Der GNSS-Empfänger 18 liefert als Sensorausgang die folgenden Größen:

- Pseudoranges (Schrägentfernungen plus Fehleranteile) zu m Satelliten

- Optional: Doppler zu m Satelliten

- Optional: ADR (Accumulated Doppler Range) zu m Satelliten

- Optional: Differentielle Korrekturdaten (z.B. SBAS), die auf die GNSS-Empfängermessungen angebracht werden

- Standardabweichungen der Messungen

Die IMU 22 liefert Messungen zu:

- Beschleunigung pro Achse

- Winkelrate pro Achse

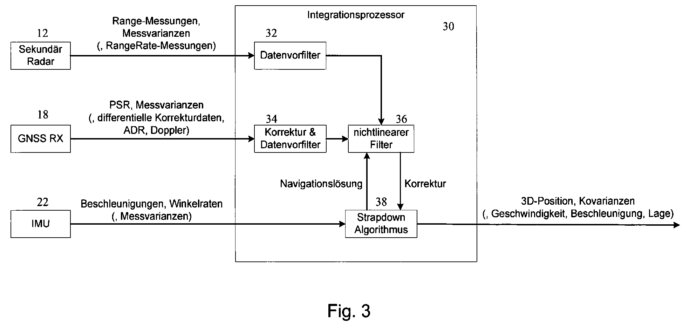

Fig. 3 zeigt einen gekoppelten Ansatz für Sekundärradar-, GNSS RX- und IMU-Sensordaten, bei dem "rohe" Beschleunigungs- und Winkelratenmessungen der IMU 22 im Integrationsprozessor 30 verarbeitet werden. Entfernungs-Messungen, Messvarianzen und ggf. Entfernungsänderungsraten-Messungen werden von der Sekundärradar-Basisstation 12 einem Datenvorfilter 32 des Integrationsprozessors 30 zugeführt. Ferner werden Pseudorangemessungen (PSR), Messvarianzen und ggf. differentielle Korrekturdaten, ADR- und Doppler-Messungen einem Korrektur- und Datenvorfilter 34 des Integrationsprozessors 30 zugeführt. Die Ausgangsdaten der beiden Filter 32 und 34 werden einem nichtlinearen Filter 36 des Integrationsprozessors 30 zugeführt, der aus diesen Messungen und einer INS Navigationslösung Korrekturdaten 38 berechnet, die von einem vom Integrationsprozessor 30 ausgeführten Strapdown-Algorithmus 38 zum Ermitteln der dreidimensionalen Position verarbeitet werden. Dem Strapdown-Algorithmus 38 werden ferner Beschleunigungen und Winkelraten und ggf. Messvarianzen zugeführt, die von der IMU 22 gemessen wurden. Diese gemessenen Bewegungen der Vorrichtung 10 werden ebenfalls vom Strapdown-Algorithmus 38 verarbeitet. Als Ergebnis kann der Inertialprozessor 30 neben der dreidimensionalen Position auch noch weitere ermittelte Daten wie Kovarianzen, Geschwindigkeit, Beschleunigung, Lage ausgeben.

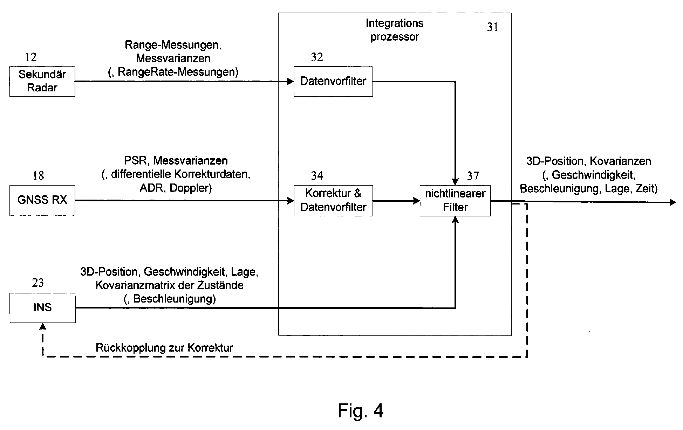

Wenn nutzerseitig die IMU bereits mit einem Navigationscomputer integriert ist, kann wie bei dem in Fig. 4 gezeigten gekoppelten Ansatz für Sekundärradar- und GNSS RX-Sensordaten die INS-Navigationslösung direkt im Integrationsprozessor 31 weiterverarbeitet werden. Dem nichtlinearen Filter 37 des Integrationsprozessors 31 werden die gefilterten Ausgangsdaten der beiden Filter 32 und 34 zugeführt und eine vom inertialen Navigationssystem (INS) 23 ermittelte 3D-Position, Geschwindigkeit, Lage, Kovarianzmatrix der Zustände und ggf. Beschleunigung der Vorrichtung 10. Im Unterschied zum in Fig. 3 gezeigten Ansatz ermittelt das nichtlineare Filter 37 anhand der zugeführten Daten nicht Korrekturdaten, sondern die dreidimensionale Position der Vorrichtung 10, die der Integrationsprozessor 31 ausgibt, insbesondere mit weiteren ermittelten Daten wie Kovarianzen, Geschwindigkeit, Beschleunigung, Lage, Zeit. Die ermittelte Positionslösung wird zudem zur Stützung des separaten inertialen Navigationssystems verwendet.

Im Folgenden werden die beiden in den Integrationsprozessoren 30 und 31 eingesetzten Verfahren zur Sensordatenintegration von Sekundärradar-, GNSS RX- und IMU-Messungen in den nichtlinearen Filtern 36 und 37 erläutert. Die Verfahren sind alternativ zueinander einzusetzen.

Die Verwendung eines nichtlinearen Messmodells wird für die Sekundärradar-Messungen auf Grund der kleinen Distanzen zwischen dem Nutzersegment und den Transponder-Stationen und der sich schnell ändernden Nutzer/Transponder-Geometrie im Operationsgebiet eingesetzt. Die Radar-Entfernungsmessung $s_k$ zwischen einem Transponder $TP$ und dem Nutzer $U$ mit dem dreidimensionalen Positionsvektor $\underline{x}_{U,k}$ zum Zeitpunkt $k$ kann wie folgt ausgedrückt werden:

$$s_k = r\left(\underline{x}_{U,k}\right) + v_k$$

mit der geometrischen Schrägentfernung $r(\underline{x}_{U,k})$

$$r\left(\underline{x}_{U,k}\right) = \sqrt{\left(x^{TP} - x_{U,k}\right)^2 + \left(y^{TP} - y_{U,k}\right)^2 + \left(z^{TP} - z_{U,k}\right)^2}\ .$$

Dabei ist $v_k$ das Messrauschen zuzüglich nicht korrigierter Fehleranteile wie Mehrwege und Kalibrationsfehler. Die Funktion $r$ wird im aktuellen Näherungspunkt $\underline{x}_{U,k}^{-}$ nicht wie bei GNSS-Messungen üblich durch eine lineare Funktion approximiert. Eine Möglichkeit ist, $r$ durch eine quadratische Funktion $\tilde{r}$ zu approximieren, die die Nichtlinearitäten des Sekundärradar-Systems besser wiedergibt:

$$\tilde{r}\left(\underline{x}_{U,k}\right) = r\left(\underline{x}_{U,k}^{-}\right) + \left(\underline{x}_{U,k} - \underline{x}_{U,k}^{-}\right)^{T} \nabla r\left(\underline{x}_{U,k}^{-}\right) + \frac{1}{2}\left(\underline{x}_{U,k} - \underline{x}_{U,k}^{-}\right)^{T} \mathrm{H}\left(\underline{x}_{U,k}^{-}\right)\left(\underline{x}_{U,k} - \underline{x}_{U,k}^{-}\right).$$

$\nabla r\left(\underline{x}_{U,k}^{-}\right)$ ist der Vektor der partiellen Ableitung von $r$ im Punkt $\underline{x}_{U,k}^{-}$ und $\mathrm{H}\left(\underline{x}_{U,k}^{-}\right)$ ist die Matrix der zweiten partiellen Ableitung von $r$ im Punkt $\underline{x}_{U,k}^{-}$. Es kann beispielsweise ein Filter 2. Ordnung für die Optimierung verwendet werden. Gut geeignet für das vorliegende nichtlineare Filterproblem ist auch ein Sigma-Point Kalman Filter. Im Allgemeinen ist ein nichtlineares Optimierungsverfahren einzusetzen, so dass nicht von einer einfachen Linearisierung der Schrägentfernungsgleichungen ausgegangen wird.

Die im Filter verwendeten Zustandsmodelle können anhand der konkreten Applikation angepasst werden. Je nach Applikation können lineare oder nichtlineare Zustandsgleichungen besser geeignet sein.

Robustheit des Systems

Das geschilderte Verfahren ist robust gegenüber Jamming, da nicht alle der hier gewählten Sensoren gleichzeitig im gleichen Maße von einem Jammer beeinflusst werden. Während GNSS im L-Band arbeitet, wird das Radarsystem im C-Band betrieben. Ein weiterer wesentlicher Unterschied ist, dass der GNSS-Empfänger im Nutzersegment passiv ist, während die Sekundärradar-Basisstation im Nutzersegment eine aktive Komponente ist. Auf Grund der hohen Messredundanz innerhalb des kritischen Operationsgebiets kann eine Störung von GNSS oder des Radarsystems auf einfache Weise detektiert werden. Die Robustheit des Systems wird weiterhin durch die Verwendung einer IMU erhöht, die weitgehend unempfindlich gegenüber Jammern ist. Der Ausgabe der dreidimensionalen Positionslösung am Integrationsprozessor geht eine Integritätsprüfung der Lösung voran. Neben reinen Fehlererkennungsverfahren können auch Fehlerausschlussverfahren auf dem Integrationsrechner implementiert werden, wodurch eine sehr hohe Verfügbarkeit der Positionslösung erzielt wird.

Insbesondere folgende Vorteile können durch die vorliegende Erfindung und durch Ausführungsformen der Erfindung erzielt werden:

- Neben der hohen Genauigkeit der dreidimensionalen Positionslösung kann gleichzeitig eine hohe Verfügbarkeit, Kontinuität und Integrität der Positionslösung innerhalb eines räumlich begrenzten Gebiets erzielt werden.

- Es sind hohe Aktualisierungsraten der Positionslösung erzielbar.

- Das System ist robuster als andere Systemvorschläge zu PALS (Precision Approach and Landing Systems) gegenüber Jamming aufgrund der gewählten Sensordatenfusion, die verschiedene Messprinzipien miteinander kombiniert, und des gekoppelten Filteransatzes.

- Die Positionierung erfolgt autonom nutzerseitig: Die Integritätsüberwachung der Positionslösung kann direkt in der Nutzereinheit erfolgen. Es besteht nur ein geringer Aufwand für den Operator und es ist kein zusätzlicher Datenlink zwischen Boden- und Nutzersegment erforderlich.

- Kleine mechanische Abmessungen, geringe Leistungsaufnahme und geringe Anschaffungs- und Betreiberkosten des lokalen Augmentierungs-Systems, d.h. der Sekundärradar Basis- und Transponder-Stationen.

- GPS-Empfänger und Antenne sowie IMU sind bereits in vielen Nutzersegmenten im Luftfahrtbereich verbaut, so dass nutzerseitig lediglich eine Erweiterung um eine Sekundärradar-Basisstation und Antenne(n) erforderlich ist. Bestehende On-Board-Rechner können genutzt werden, um darauf die nichtlinearen Filteralgorithmen zu implementieren.

- Das Sekundärradar-Bodensegment kann auch auf mobilen Plattformen (z.B. Flugzeugträger) einfach installiert werden.

Die vorliegende Erfindung hat das Potential, eine dreidimensionale Positionslösung in einem räumlich begrenzten Gebiet (z.B. im Umfeld von

Helikopterlandeplätzen) mit den bei Luftfahrtanwendungen geforderten Genauigkeits-, Verfügbarkeits- und Integritätsanforderungen zu liefern. Somit kann das Unfallrisiko drastisch minimiert werden, sowie Zeit und Kosten eingespart werden, indem autonome Landungen bei schlechter/keiner Sicht zum Landeplatz durchgeführt werden können. Die vorliegende Erfindung ist zudem robust gegenüber Störquellen.

BEZUGSZEICHEN UND AKRONYME

| 10 | Vorrichtung zur dreidimensionalen Positionierung |
|----|---|
| 12 | Sekundärradar-Basisstation |
| 14 | Sekundärradar -Transponder |
| 16 | Radar-Antenne |
| 18 | GNSS Empfänger/GNSS RX |
| 20 | GNSS Empfangsantenne |
| 22 | IMU |
| 23 | INS |
| 24 | Navigations-Computer |
| 26 | Helikopter-Landeplatz |
| 28 | Sekundärradar-Operationsgebiet |
| 30, 31 | Integrationsprozessor |
| 32 | Datenvorfilter für Radarentfernungsmessungen |
| 34 | Korrektur & Datenvorfilter für Pseudorangemessungen |
| 36 | nichtlinearer Filter |
| 38 | Strapdown-Algorithmus |

| FMCW | Frequency Modulated Continuous Wave/Frequenzmoduliertes Dauerstrichradar |
|----|---|
| GNSS | Global Navigation Satellite System/Globales Satellitennavigationssystem |
| HDOP | Horizontal Dilution Of Precision/Horizontale Genauigkeitsverringerung |
| IMU | Inertial Measurement Unit/Inertialmesseinheit |
| INS | Inertial Navigation System/Inertiales Navigationssystem |
| ISA | Inertial Sensor Assembly/Inertialsensoranordnung |
| NED | North-East-Down/Nord-Ost-Unten |
| RX | Receiver |
| SBAS | Satellite Based Augmentation System/Satelliten-basiertes Ergänzungssystem |
| VDOP | Vertical Dilution Of Precision /Vertikale Genauigkeitsverringerung |

**Patentansprüche**

1. Vorrichtung (10) zur dreidimensionalen Positionierung aufweisend eine Sekundärradar-Basisstation (12), die zur Entfernungsmessung zu Transpondern (14) vorgesehen ist und mindestens eine Radar-Antenne (16) aufweist, einen GNSS-Empfänger (18), der zur Messung von GNSS-Signalen vorgesehen ist und eine GNSS-Empfangsantenne (20) aufweist, eine Inertialmesseinheit (22), die dazu vorgesehen ist, die Lage der GNSS-Empfangsantenne sowie der mindestens einen Radar-Antenne in einem gemeinsamen Koordinatensystem in Bezug auf einen Referenzpunkt zu ermitteln, und einen Integrationsprozessor (24; 30; 31), dem Pseudorangemessungen des GNSS-Empfängers, Radar-Entfernungsmessungen und von der Inertialmesseinheit (22) gemessene Bewegungen der Vorrichtung um die Achsen des gemeinsamen Koordinatensystems, im Weiteren IMU Daten genannt, zugeführt werden, **dadurch gekennzeichnet, dass** der Integrationsprozessor eine dreidimensionale Position eines gemeinsamen Bezugspunktes durch Fusion der zugeführten Messungen und Daten entsprechend einer Sensordatenfusion ermittelt, wobei eine Hebelarmkompensation unter Berücksichtigung der gemessenen Bewegungen durchgeführt wird, wobei der Integrationsprozessor (24; 30; 31) einen nichtlinearen Filter (36; 37) zum Verarbeiten der Pseudorangemessungen des GNSS-Empfängers, der von der Inertialmesseinheit (22) erzeugten IMU Daten und der Radar-Entfernungsmessungen aufweist.

2. Vorrichtung nach Anspruch 1,
**dadurch gekennzeichnet, dass**
die Sekundär-Basisstation (12) ausgebildet ist, im C-Band (IEEE) zu arbeiten und FMCW-Radarsignale zur Entfernungsmessung zu nutzen.

3. Vorrichtung nach Anspruch 1 oder 2,
**dadurch gekennzeichnet, dass**
ein inertiales Navigationssystem (23) vorgesehen ist, das die Inertialmesseinheit (22) aufweist, und
der Integrationsprozessor (24; 30; 31) ausgebildet ist, außerhalb eines Operationsgebiets (28) des Sekundärradar-Systems (12) eine dreidimensionale Position mit einer ersten gekoppelten Navigation auf Basis der Pseudorangemessungen des GNSS-Empfängers (18) und von Inertialnavigationsmessungen des inertialen Navigationssystems (23) durchzuführen, und innerhalb des Operationsgebiets (28) der Sekundärradar-Basisstation (12) eine dreidimensionale Position mit einer zweiten gekoppelten Navigation auf Basis der Radar-Entfernungsmessungen, der Pseudorangemessungen des GNSS-Empfängers (18) und der Inertialnavigationsmessungen des inertialen Navigationssystems (23) durchzuführen.

4. Vorrichtung nach Anspruch 1, 2 oder 3,
**dadurch gekennzeichnet, dass**
der nichtlineare Filter (36) zum Ermitteln von INS Navigationslösungs-Korrekturdaten aus den Pseudorangemessungen des GNSS-Empfängers und den Radar-Entfernungsmessungen vorgesehen ist, und
der Integrationsprozessor (30) einen Strapdown-Algorithmus (38) ausführt, der anhand der Korrekturdaten und der von der Inertialmesseinheit (22) gemessenen Bewegungen der Vorrichtung um die Achsen des gemeinsamen Koordinatensystems die dreidimensionale Position ermittelt.

5. Vorrichtung nach Anspruch 1, 2 oder 3,
**dadurch gekennzeichnet, dass**
der nichtlineare Filter (37) zum Ermitteln der dreidimensionalen Position anhand der Pseudorangemessungen des GNSS-Empfängers, der Radar-Entfernungsmessungen und einer INS Navigationslösung ausgebildet ist und
die ermittelte dreidimensionale Position zur Kalibration an ein inertiales Navigationssystem (23) der Vorrichtung zurück gekoppelt wird.

6. Vorrichtung nach einem der vorhergehenden Ansprüche,
**dadurch gekennzeichnet, dass**
der nichtlineare Filter (36; 37) eine Schrägentfernung zwischen der mindestens einen Radar-Antenne (16) und einem Transponder (14) durch eine nichtlineare Funktion, insbesondere als Spezialfall eine quadratische Funktion approximiert, insbesondere als Spezialfall eine Schrägentfernung r unter Verwendung der folgenden nichtlinearen Funktion approximiert wird:

$$\tilde{r}\left(\underline{x}_{U,k}\right) = r\left(\underline{x}^-_{U,k}\right) + \left(\underline{x}_{U,k} - \underline{x}^-_{U,k}\right)^T \nabla r\left(\underline{x}^-_{U,k}\right) + \frac{1}{2}\left(\underline{x}_{U,k} - \underline{x}^-_{U,k}\right)^T \mathrm{H}\left(\underline{x}^-_{U,k}\right)\left(\underline{x}_{U,k} - \underline{x}^-_{U,k}\right)$$

mit $\underline{x}_{U,k}$ ist ein dreidimensionaler Positionsvektor zum Zeitpunkt $k$ zwischen einem Transponder $TP$ und der Vorrichtung $U$, $\underline{x}^-_{U,k}$ ist ein aktueller Näherungspunkt, $\nabla r\left(\underline{x}^-_{U,k}\right)$ ist der Vektor der partiellen Ableitung von $r$ im Punkt $\underline{x}^-_{U,k}$ und $\mathrm{H}\left(\underline{x}^-_{U,k}\right)$ ist die Matrix der zweiten partiellen Ableitung von $r$ im Punkt $\underline{x}^-_{U,k}$.

7. Vorrichtung nach Anspruch 6,
**dadurch gekennzeichnet, dass**
der nichtlineare Filter (36; 37) zur Lösung des nichtlinearen Filterproblems ein nichtlineares Optimierungsverfahren einsetzt, insbesondere ein Sigma-Point Kalman Filter oder ein Filter 2. Ordnung für die Optimierung verwendet.

8. Vorrichtung nach einem der vorhergehenden Ansprüche,
**dadurch gekennzeichnet, dass**
der nichtlineare Filter (36; 37) ein Zustandsmodell implementiert, das abhängig von der Applikation der Vorrichtung lineare oder nichtlineare Zustandsgleichungen aufweist.

9. Verfahren zur dreidimensionalen Positionierung, mit den folgenden Schritten:

Empfangen von Radar-Entfernungsmessungen einer Sekundärradar-Basisstation (12), die zur Entfernungsmessung zu Transpondern (14) vorgesehen ist und mindestens eine Radar-Antenne (16) aufweist,

11

Empfangen von Pseudorangemessungen eines GNSS-Empfängers (18), der zur Messung von GNSS-Signalen vorgesehen ist und eine GNSS-Empfangsantenne (20) aufweist,

Empfangen von Bewegungsmessungen einer Inertialmesseinheit (22), die dazu vorgesehen ist, die Lage der GNSS-Empfangsantenne sowie der mindestens einen Radar-Antenne in einem gemeinsamen Koordinatensystem in Bezug auf einen Referenzpunkt zu ermitteln, **gekennzeichnet durch** das

Ermitteln einer dreidimensionalen Position eines gemeinsamen Bezugspunktes **durch** Fusionieren der Pseudorangemessungen des GNSS-Empfängers, der Radar-Entfernungsmessungen und der Bewegungsmessungen der Inertialmesseinheit, im Weiteren IMU Daten genannt, entsprechend einer Sensordatenfusion unter Berücksichtigung einer Hebelarmkompensation zwischen dem Bezugspunkt, der GNSS-Empfangsantenne, der mindestens einen Radar-Antenne und der Inertialmesseinheit, und

Nichtlineares Filtern (37) zum Verarbeiten der Pseudorangemessungen des GNSS-Empfängers, der von der Inertialmesseinheit (22) erzeugten IMU Daten und der Radar-Entfernungsmessung.

**10.** Verfahren nach Anspruch 9,

ferner **gekennzeichnet durch** die folgenden Schritte:

Nichtlineares Filtern (36) zum Ermitteln von INS Navigationslösungs-Korrekturdaten aus den empfangenen Pseudorangemessungen und den empfangenen Radar-Entfernungsmessungen und

Ausführen eines Strapdown-Algorithmus (38) zum Ermitteln der dreidimensionalen Position anhand der Korrekturdaten und der empfangenen Bewegungsmessungen, oder

Nichtlineares Filtern (37) zum Ermitteln der dreidimensionalen Position anhand der empfangenen Pseudorangemessungen, der empfangenen Radar-Entfernungsmessungen und der empfangenen INS Navigationslösung.

**11.** Verfahren nach Anspruch 9 oder 10,

**dadurch gekennzeichnet, dass**

das nichtlineare Filtern (36; 37) das Approximieren einer Schrägentfernung zwischen der mindestens einen Radar-Antenne (16) und einem Transponder (14) durch eine nichtlineare Funktion, insbesondere als Spezialfall eine quadratische Funktion, aufweist, insbesondere als Spezialfall das Approximieren einer Schrägentfernung $r$ unter Verwendung der folgenden nichtlinearen Funktion:

$$\tilde{r}\left(\underline{x}_{U,k}\right) = r\left(\underline{x}_{U,k}^-\right) + \left(\underline{x}_{U,k} - \underline{x}_{U,k}^-\right)^T \nabla r\left(\underline{x}_{U,k}^-\right) + \frac{1}{2}\left(\underline{x}_{U,k} - \underline{x}_{U,k}^-\right)^T \mathrm{H}\left(\underline{x}_{U,k}^-\right)\left(\underline{x}_{U,k} - \underline{x}_{U,k}^-\right).$$

mit $\underline{x}_{U,k}$ ist ein dreidimensionaler Positionsvektor zum Zeitpunkt $k$ zwischen einem Transponder *TP* und der Vorrichtung $U$, $\underline{x}_{U,k}^-$ ist ein aktueller Näherungspunkt, $\nabla r\left(\underline{x}_{U,k}^-\right)$ ist der Vektor der partiellen Ableitung von $r$ im Punkt $\underline{x}_{U,k}^-$ und $\mathrm{H}\left(\underline{x}_{U,k}^-\right)$ ist die Matrix der zweiten partiellen Ableitung von $r$ im Punkt $\underline{x}_{U,k}^-$.

**12.** Verfahren nach Anspruch 11,

**dadurch gekennzeichnet, dass**

das nichtlineare Filtern (36; 37) zur Lösung des nichtlinearen Filterproblems ein nichtlineares Optimierungsverfahren einsetzt, insbesondere ein Sigma-Point Kalman Filter oder ein Filter 2. Ordnung für die Optimierung verwendet.

**13.** Computer-Programm zur Durchführung eines Verfahrens gemäß einem der Ansprüche 9-12.

**14.** Computer-Programm-Produkt beinhaltend einen maschinenlesbaren Programmträger, auf dem ein Computer-Programm gemäß Anspruch 13 in der Form von elektronisch und/oder optischen lesbaren Steuersignalen gespeichert ist.

**Claims**

**1.** A device (10) for three-dimensional positioning, comprising:

a secondary radar base station (12), which is provided for range measurement of transponders (14), and which has at least one radar antenna (16),

a GNSS receiver (18), which is provided for measuring GNSS signals, and which has a GNSS receiver antenna (20),

an inertial measuring unit (22), which is provided for determining a location of the GNSS receiver antenna and of the at least one radar antenna in a shared coordinate system in relation to a reference point, and

an integration processor (24; 30; 31), which is supplied with pseudo range measurements of the GNSS receiver, radar range measurements and motions of the device about an axes of the shared coordinate system measured by the inertial measuring unit (22), in the following called IMU data,

**characterized in that** the integration processor determines a three-dimensional position of a common reference point by fusion of the supplied measurements and data according to a sensor data fusion, a lever arm compensation being carried out which takes the measured motions into account, wherein the integration processor (24; 30; 31) has a nonlinear filter (36; 37) to process the pseudo range measurements of the GNSS receiver, the IMU data of the inertial measuring unit (22), and the radar range measurements.

2. The device according to claim 1,
**characterized in that**
the secondary base station (12) is configured to operate in a C-Band frequency band (IEEE) and uses FMCW radar signals for the range measurement.

3. The device according to claim 1 or 2,
**characterized in that**
an inertial navigation system (23) is provided, which contains the inertial measuring unit (22), and
the integration processor (24; 30; 31) is configured to implement, outside an operational area (28) of the secondary radar base system (12), a three-dimensional position using a first coupled navigation based on the pseudo range measurements of the GNSS receiver (18) and inertial navigation measurements of the inertial navigation system (23), and to implement, inside the operational area of the secondary radar base station (12), a three-dimensional position using a second coupled navigation based on the radar range measurements, the pseudo range measurements of the GNSS receiver (18), and the inertial navigation measurements of the inertial navigation system (23).

4. The device according to claim 1, 2 or 3,
**characterized in that**
the nonlinear filter (36) is provided for determining INS navigation solution correction data based on the pseudo range measurements of the GNSS receiver and the radar range measurements, and
the integration processor (30) executes a strapdown algorithm (38) which, based on the correction data and the motions of the device about the axes of the shared coordinate system measured by the inertial measuring unit (22), determines the three-dimensional position.

5. The device according to claim 1, 2 or 3,
**characterized in that**
the nonlinear filter (37) is configured for determining the three-dimensional position based on the pseudo range measurements of the GNSS receiver, the radar range measurements, and the INS navigation solution, and
for calibration purposes, the determined three-dimensional position is coupled back to the inertial navigation system (23) of the device.

6. The device according to any one of the foregoing claims,
**characterized in that**
the nonlinear filter (36; 37) approximates a slant range between the at least one radar antenna (16) and a transponder (14) using a nonlinear function, in particular a quadratic function as a special case, in particular a slant range r as a special case, using the following nonlinear function:

$$\tilde{r}\left(\underline{x}_{U,k}\right) = r\left(\underline{x}_{U,k}^{-}\right) + \left(\underline{x}_{U,k} - \underline{x}_{U,k}^{-}\right)^{T} \nabla r\left(\underline{x}_{U,k}^{-}\right) + \frac{1}{2}\left(\underline{x}_{U,k} - \underline{x}_{U,k}^{-}\right)^{T} \mathrm{H}\left(\underline{x}_{U,k}^{-}\right)\left(\underline{x}_{U,k} - \underline{x}_{U,k}^{-}\right)$$

where $\underline{x}_{U,k}$ is a three-dimensional position vector between a transponder TP and the device U at time k, $\underline{x}_{U,k}^{-}$ is a current approximation point, $\nabla r\left(\underline{x}_{U,k}^{-}\right)$ is the vector of the partial derivative of r at point $\underline{x}_{U,k}^{-}$ and $\mathrm{H}\left(\underline{x}_{U,k}^{-}\right)$ is the matrix of the second partial derivative of r at point $\underline{x}_{U,k}^{-}$ .

7. The device according to claim 6,
   **characterized in that**
   the nonlinear filter (36; 37) uses a nonlinear optimization method to solve the nonlinear filter problem, in particular a sigma point Kalman filter or a second-order filter being used for the optimization.

8. The device according to any one of the foregoing claims,
   **characterized in that**
   the nonlinear filter (36; 37) implements a state model having linear or nonlinear state equations, depending on an application of the device.

9. A method for three-dimensional positioning, the method comprising the steps of:

   receiving radar range measurements of a secondary radar base station (12), which is provided for range measurement for transponders (14) and which has at least one radar antenna (16),
   receiving pseudo range measurements of a GNSS receiver (18), which is provided for measuring GNSS signals and which has a GNSS receiver antenna (20),
   receiving motion measurements of an inertial measuring unit (22), which is provided for determining the location of the GNSS receiver antenna and of the at least one radar antenna in a shared coordinate system in relation to a reference point,
   **characterized by**
   determining a three-dimensional position of a common reference point by fusing the pseudo range measurements of the GNSS receiver, the radar range measurements, and the motion measurements of the inertial measuring unit, in the following called IMU data, according to a sensor data fusion, taking into account a lever arm compensation between the reference point, the GNSS receiver antenna, the at least one radar antenna and the inertial measuring unit, and
   nonlinear filtering (37) to process the pseudo range measurements of the GNSS receiver, the IMU data of the inertial measuring unit (22), and the radar range measurements.

10. The method according to claim 9,
    further **characterized by** the following steps of:

    nonlinear filtering (36) for determining INS navigation solution correction data based on the received pseudo range measurements and the received radar range measurements, and
    executing a strapdown algorithm (38) for determining the three-dimensional position based on the correction data and the received motion measurements, or
    nonlinear filtering (37) for determining the three-dimensional position based on the received pseudo range measurements, the received radar range measurements, and the received INS navigation solution.

11. The method according to claim 9 or 10,
    **characterized in that**
    the nonlinear filtering (36; 37) includes an approximation of a slant range between the at least one radar antenna (16) and a transponder (14) using a nonlinear function, in particular a quadratic function as a special case, in particular the approximation of a slant range r as a special case, using the following nonlinear function:

$$\tilde{r}\left(\underline{x}_{U,k}\right) = r\left(\underline{x}_{U,k}^{-}\right) + \left(\underline{x}_{U,k} - \underline{x}_{U,k}^{-}\right)^{T} \nabla r\left(\underline{x}_{U,k}^{-}\right) + \frac{1}{2}\left(\underline{x}_{U,k} - \underline{x}_{U,k}^{-}\right)^{T} \mathrm{H}\left(\underline{x}_{U,k}^{-}\right)\left(\underline{x}_{U,k} - \underline{x}_{U,k}^{-}\right)$$

where $\underline{x}_{U,k}$ is a three-dimensional position vector between a transponder TP and the device U at time k, $\underline{x}_{U,k}^{-}$ is a current approximation point, $\nabla r\left(\underline{x}_{U,k}^{-}\right)$ is the vector of the partial derivative of r at point $\underline{x}_{U,k}^{-}$ and $\mathrm{H}\left(\underline{x}_{U,k}^{-}\right)$ is the matrix of the second partial derivative of r at point $\underline{x}_{U,k}^{-}$ .

**12.** The method according to claim 11,
**characterized in that**
the nonlinear filtering (36; 37) uses a nonlinear optimization method for solving the nonlinear filter problem, and in particular a sigma point Kalman filter or a second-order filter for the optimization.

**13.** A computer program for carrying out a method according to any one of claims 9 to 12.

**14.** A computer program product containing a machine-readable program medium on which a computer program according to claim 13 is stored in the form of electronically and/or optically readable control signals.


**Revendications**

**1.** Dispositif (10) de positionnement tridimensionnel, comprenant une station radar secondaire (12) prévue pour mesurer la distance aux transpondeurs (14) et présentant une antenne radar (16),
un récepteur GNSS (18) prévu pour mesurer des signaux GNSS et doté d'une antenne de réception GNSS (20),
une unité de mesure inertielle (22) prévue pour déterminer, par rapport à un point de référence, la position de l'antenne de réception GNSS et celle de ladite au moins une antenne radar dans un système de coordonnées commun, et un processeur d'intégration (24 ; 30 ; 31), auquel sont fournies des mesures de pseudo-distance du récepteur GNSS, des mesures de distance par radar et des mouvements effectués par le dispositif autour des axes du système de coordonnées commun et mesurés par l'unité de mesure inertielle (22), désignés ci-après "données IMU",
**caractérisé en ce que**
le processeur d'intégration détermine une position tridimensionnelle d'un point de référence commun par fusion des mesures et des données fournies conformément à une fusion de données de capteurs, une compensation de décalage étant effectuée en prenant en compte lesdits mouvements mesurés, le processeur d'intégration (24 ; 30 ; 31) présentant un filtre non linéaire (36 ; 37) prévu pour le traitement des mesures de pseudo-distance du récepteur GNSS, des données IMU générées par l'unité de mesure inertielle (22) et des mesures de distance par radar.

**2.** Dispositif selon la revendication 1,
**caractérisé en ce que**
la station radar secondaire (12) est conçue pour fonctionner en bande C (IEEE) et utiliser des signaux radar FMCW pour mesurer la distance.

**3.** Dispositif selon la revendication 1 ou 2,
**caractérisé en ce qu'**il est prévu
un système de navigation inertielle (23) qui présente l'unité de mesure inertielle (22), et **en ce que**
le processeur d'intégration (24 ; 30 ; 31) est conçu pour effectuer, en dehors d'une zone d'opération (28) du système radar secondaire (12), une détermination de position tridimensionnelle à l'aide d'une première navigation couplée sur la base des mesures de pseudo-distance du récepteur GNSS (28) et de mesures de navigation inertielle du système de navigation inertielle, et pour effectuer, à l'intérieur de la zone d'opération (28) de la station radar secondaire (12), une détermination de position tridimensionnelle à l'aide d'une deuxième navigation couplée sur la base des mesures de distance par radar, des mesures de pseudo-distance du récepteur GNSS (18) et des mesures de navigation inertielle du système de navigation inertielle (23).

**4.** Dispositif selon la revendication 1, 2 ou 3,
**caractérisé en ce que**
le filtre non linéaire (36) prévu pour déterminer des données de correction pour une solution de navigation INS à partir des mesures de pseudo-distance du récepteur GNSS et des mesures de distance par radar, et **en ce que** le processeur d'intégration (30) exécute un algorithme de type strap-down (38) qui calcule la position tridimensionnelle à partir des données de correction et des mouvements effectués par le dispositif autour des axes du système de coordonnées commun et mesurés par l'unité de mesure inertielle (22).

**5.** Dispositif selon la revendication 1, 2 ou 3,
**caractérisé en ce que**
le filtre non linéaire (37) est conçu pour déterminer la position tridimensionnelle à partir des mesures de pseudo-distance du récepteur GNSS, des mesures de distance par radar et d'une solution de navigation INS et **en ce que**
la position tridimensionnelle déterminée est couplée rétroactivement à un système de navigation inertielle (23) pour calibration.

**6.** Dispositif selon l'une des revendications précédentes,
**caractérisé en ce que**
le filtre non linéaire (36 ; 37) approxime une distance oblique entre ladite au moins une antenne radar (16) et un transpondeur (14) à l'aide d'une fonction non linéaire, notamment, comme cas particulier, à l'aide d'une fonction quadratique, et notamment, comme cas particulier, une distance oblique ren utilisant la fonction non linéaire suivante :

$$\tilde{r}\left(\underline{x}_{U,k}\right) = r\left(\underline{x}_{U,k}^{-}\right) + \left(\underline{x}_{U,k} - \underline{x}_{U,k}^{-}\right)^{T} \nabla r\left(\underline{x}_{U,k}^{-}\right) + \frac{1}{2}\left(\underline{x}_{U,k} - \underline{x}_{U,k}^{-}\right)^{T} \mathrm{H}\left(\underline{x}_{U,k}^{-}\right)\left(\underline{x}_{U,k} - \underline{x}_{U,k}^{-}\right).$$

dans le cadre de laquelle $(\underline{x}_{U,k})$ représente un vecteur de position tridimensionnelle à l'instant $k$ entre un transpondeur TPet le dispositif U, $\underline{x}_{U,k}^{-}$ représente un point d'approximation actuel, $\nabla r\left(\underline{x}_{U,k}^{-}\right)$ représente le vecteur de la dérivée partielle de $r$ au point $\underline{x}_{U,k}^{-}$, et $\mathrm{H}\underline{x}_{U,k}$ représente la matrice de la deuxième dérivée partielle de $r$ au point $\underline{x}_{U,k}^{-}$.

**7.** Dispositif selon la revendication 6,
**caractérisé en ce que**
le filtre non linéaire (36 ; 37) utilise pour résoudre le problème de filtre non linéaire un procédé d'optimisation non linéaire, plus particulièrement un filtre de Kalman utilisant des sigma-points ou un filtre du 2e ordre pour l'optimisation.

**8.** Dispositif selon l'une des revendications précédentes,
**caractérisé en ce que**
le filtre non linéaire (36 ; 37) implémente un modèle d'état qui, en fonction de l'application du dispositif, présente des équations d'état linéaires ou non linéaires.

**9.** Procédé de positionnement tridimensionnel, comportant les étapes suivantes :

la réception de mesures de distance par radar d'une station radar secondaire (12), laquelle est prévue pour mesurer la distance aux transpondeurs (14) et présente au moins une antenne radar (16)
la réception de mesures de distance par radar d'une station radar secondaire (12) laquelle est prévue pour mesurer la distance aux transpondeurs (14) et présente au moins une antenne radar (16),
la réception de mesures de pseudo-distance d'un récepteur GNSS (18) prévu pour mesurer des signaux GNSS et présentant une antenne de réception GNSS (18),
la réception de mesures des mouvements d'une unité de mesure inertielle (22) prévue pour déterminer, par rapport à une point de référence, la position de l'antenne de réception GNSS et celle de ladite au moins une antenne radar dans un système de coordonnées commun
**caractérisé par**
la détermination d'une position tridimensionnelle d'un point de référence commun par fusion des mesures de pseudo-distance du récepteur GNSS, des mesures de distance par radar et des mesures des mouvements, ci-après désignés "données IMU" de l'unité de mesure inertielle, conformément à une fusion de données de détection en prenant en compte une compensation de décalage entre le point de référence, l'antenne de réception GNSS, ladite au moins une antenne radar et l'unité de mesure inertielle, et par
le filtrage non linéaire (37) pour traiter les mesures de pseudo-distance du récepteur GNSS, des données IMU générées par l'unité de mesure inertielle (22) et des mesures de distance par radar,

**10.** Procédé selon la revendication 9,
**caractérisé en outre par** les étapes suivantes:

le filtrage non linéaire (36) pour déterminer des données de correction pour une solution de navigation INS à partir des mesures de pseudo-distance reçues et des mesures de distance par radar reçues et
l'exécution d'un algorithme de type strap-down (38) pour déterminer la position tridimensionnelle à partir des données de correction et des mesures de mouvements reçues, ou

le filtrage non linéaire (37) pour calculer la position tridimensionnelle à partir des mesures de pseudo-distance reçues, des mesures de distance par radar reçues et de la solution de navigation INS reçue.

11. Procédé selon la revendication 9 ou 10,
    **caractérisé en ce que**
    le filtrage non linéaire (36 ; 37) présente l'approximation d'une distance oblique entre ladite au moins une antenne radar (16) et un transpondeur (14) à l'aide d'une fonction non linéaire, plus particulièrement, comme particularité, à l'aide d'une fonction quadratique, et plus particulièrement, comme particularité, l'approximation d'une distance oblique en utilisant la fonction non linéaire suivante :

$$\tilde{r}\left(\underline{x}_{U,k}\right) = r\left(\underline{x}_{U,k}^{-}\right) + \left(\underline{x}_{U,k} - \underline{x}_{U,k}^{-}\right)^{T} \nabla r\left(\underline{x}_{U,k}^{-}\right) + \frac{1}{2}\left(\underline{x}_{U,k} - \underline{x}_{U,k}^{-}\right)^{T} \mathrm{H}\left(\underline{x}_{U,k}^{-}\right)\left(\underline{x}_{U,k} - \underline{x}_{U,k}^{-}\right)$$

dans le cadre de laquelle $(\underline{X}_{U,k})$ représente un vecteur de position tridimensionnelle à l'instant k entre un transpondeur

*TP* et le dispositif *U,* $\underline{x}_{U,k}$ représente un point d'approximation actuel, $\nabla r\left(\underline{x}_{U,k}^{-}\right)$ représente le vecteur de la dérivée partielle de *r* au point $\underline{x}_{U,k}^{-}$, et $\mathrm{H}\underline{x}_{U,k}$ représente la matrice de la deuxième dérivée partielle de *r* au

point $\underline{x}_{U,k}^{-}$.

12. Procédé selon la revendication 11,
    **caractérisé en ce que**
    le filtrage non linéaire (36 ; 37) utilise pour résoudre le problème de filtre non linéaire un procédé d'optimisation non linéaire, plus particulièrement un filtre de Kalman utilisant des sigma-points ou un filtre du 2e ordre pour l'optimisation.

13. Programme d'ordinateur pour mettre en oeuvre un procédé selon l'une des revendications 9 à 12.

14. Produit logiciel d'ordinateur comprenant un support de logiciel lisible par machine, sur lequel un programme d'ordinateur conformément à la revendication 13 est enregistré sous forme de signaux de commande lisibles de manière électronique et/ou optique.

Fig. 1

**Fig. 2**

Integrationsprozessor

| 12 | Range-Messungen, Messvarianzen (, RangeRate-Messungen) | 32 | 30 |

Sekundär Radar → Datenvorfilter

PSR, Messvarianzen (, differentielle Korrekturdaten, ADR, Doppler)

18

GNSS RX

34
Korrektur & Datenvorfilter

36
nichtlinearer Filter

Navigationslösung        Korrektur

22    Beschleunigungen, Winkelraten
(, Messvarianzen)

IMU

38
Strapdown Algorithmus

3D-Position, Kovarianzen
(, Geschwindigkeit, Beschleunigung, Lage)

Fig. 3

Integrations prozessor 31

Range-Messungen,
Messvarianzen
(, RangeRate-Messungen)

12

Sekundär
Radar

32

Datenvorfilter

PSR, Messvarianzen
(, differentielle Korrekturdaten,
ADR, Doppler)

18

GNSS RX

34

Korrektur &
Datenvorfilter

37

nichtlinearer
Filter

3D-Position, Kovarianzen
(, Geschwindigkeit,
Beschleunigung, Lage, Zeit)

3D-Position, Geschwindigkeit, Lage,
Kovarianzmatrix der Zustände
(, Beschleunigung)

23

INS

Rückkopplung zur Korrektur

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• US 2009140887 A1

**In der Beschreibung aufgeführte Nicht-Patentliteratur**

• **THIBAUT G.** Cost Benefit Analysis on Precision Approach and Landing Systems (PALS) - Final Report. *NIAG SG-99 Abschlussbericht,* Juni 2007, vol. 2
• Precision Landing of Aircraft Using Integrity Beacons. **COHEN C.E. ; PERVAN B.S. ; COBB H.S. ; LAWRENCE D.G. ; POWELL J.D. ; PARKINSON B.W.** Global Positioning System: Theory and Applications. American Institute of Aeronautics and Astronautics, 1996, vol. II, 164

• GPS and Inertial Integration. **GREENSPAN R.L.** Global Positioning System: Theory and Applications Volume. American Institute of Aeronautics and Astronautics, 1996, vol. II, 164
• Produktdokumentation. *SYMEO Local Positioning Radar System LPR-B 1 D,* 2009